# EUROPEAN PATENT SPECIFICATION

(11) **EP 0 747 401 B1**
(45) Date of publication and mention of the grant of the patent: **17.10.2001**
(21) Application number: 96109099.0
(22) Date of filing: 06.06.1996
(51) Int. Cl.: C08F 10/00, C08F 4/646

(54) **Bifunctional electron donors for olefin polymerization**
Bifunktionelle Elektrondonore für die Olefinpolymerisation
Donneurs d'électrons bifonctionnels pour la polymérisation d'oléfines

(30) Priority: 06.06.1995 US 471621
(43) Date of publication of application: 11.12.1996
(73) Proprietor: FINA TECHNOLOGY, INC., Houston, Texas 77267-4412 (US)
(72) Inventor: Shamshoum, Edwar S., Houston, Texas 77062 (US); Raucher, David J., Angleton, Texas 77515 (US)
(74) Representative: Leyder, Francis

(56) References cited:
- EP-A- 0 349 772
- EP-A- 0 410 433
- EP-A- 0 473 899
- US-A- 5 006 619

## Description

### TECHNICAL FIELD:

The present invention provides a catalyst system for the polymerization of olefins that includes the combination of a titanium catalyst with an electron donor compound of the formulae: 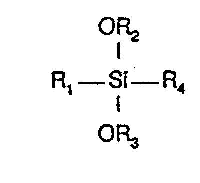 or 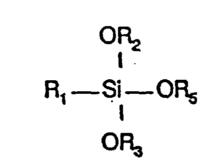 wherein R₁ is as defined below R₂, R₃ and R₅ are alkyl or aryl groups; and R₄ is an alkyl with a primary carbon atom attached to the silicon atom.

### DESCRIPTION OF PRIOR ART:

Catalyst systems for the polymerization of olefins are well known in the art. Typically, these systems include a Ziegler-Natta type polymerization catalyst; a co-catalyst, usually an organoaluminum compound; and an electron donor compound. Examples of such catalyst systems are shown in the following U.S. Patents: 4,107,413; 4,294,721; 4,439,540; 4,115,319; 4,220.554; 4,460,701; and 4,562,173. EP-A-473899 discloses catalysts for the polymerization of alpha olefins comprising the reaction product of a) an Al-alkyl compound, b) a trifluoropropyl substituted silane compound and c) a solid component comprising a titanium compound.

EP-A-349, 772 discloses a catalyst system for the polymerization of propylene which is based on the reaction product of a magnesium halide with an electron donor and a tetravalent titanium compound, a halogen-free organoaluminum compound and two different organosilicon compounds as stereo-regulator.

US-A-5, 006, 619 discloses catalysts for the polymerization of 1-olefins prepared by the reaction of silica or alumina with a multifunctional silane compound, a titanium, vanadium, zirconium or mixture compound and a group II A organo-metallic compound. These are just a few of the scores of issued patents relating to catalysts and catalyst systems designed primarily for the polymerization of propylene and ethylene.

A Ziegler-Natta type polymerization catalyst is basically a complex derived from a halide of a transition metal, for example, titanium, chromium or vanadium with a metal hydride and/or a metal alkyl that is typically an organoaluminum compound. The catalyst is usually comprised of a titanium halide supported on a magnesium compound complexed with an alkylaluminum.

The development of these polymerization catalysts has proceeded seemingly in generations of catalysts. The catalyst disclosed in the patents referenced above are considered by most to be third generation catalysts. With each new generation of catalysts, the catalyst properties have Improved.

In addition to the Improved catalysts, Improved activation methods have also led to increases In the catalyst efficiency. A most recent discovery includes a process for pre-polymerizing the catalyst just prior to introducing the catalyst into the reaction zone.

In addition to the development of new catalysts and new reaction processes, a discovery of an appropriate co-catalyst or electron donor to go with the new generation of catalysts in forming a total catalyst system would be of great benefit to the polymerization art. In such a total catalyst system, a co-catalyst activates the catalyst and provides the initiation of a polymer chain. The co-catalyst that works well with the new generation catalysts is an organoaluminum compound, most typically triethylaluminum (TEAI) or another trialkylaluminum. Examples of other useful organoaluminum compounds Include an alkylaluminum dihalide, a trialkoxyaluminum, a dialkylaluminum halide, and a triisobutylaluminum.

An electron donor compound is used in the polymerization reaction to reduce the atactic form of the polymer thereby giving control of and increasing the production of isotactic polymers. Work disclosed in Makromol. Chem., Härkönen et al, vol. 192, p. 2857 (1991) and in "Catalytic Olefin Polymerization" (Keii, T., Soga, K., Eds., Elsevier:New York, 1990) Härkönen et al, p. 87, has shown that some effects of the donor can be influenced by its structure and suggests that a high performance alkoxysilane donor will contain at least two small alkoxy groups, preferably methoxy, and one or two branched alkyl groups. Other work suggested that a good donor preferably has a dimethoxy structure with a bulky alkyl or cycloalkyl group containing at least one secondary or tertiary carbon, but that the second alkyl group has a primary carbon. One such group of electron donors are disclosed in U.S. Patent No. 4,927,797.

The present invention comprises another such discovery of a group of compounds which function as electron donors. It has been surprisingly discovered that a specific group of compounds serve as bifunctional electron donors In combination with a Ziegler-Natta type catalyst.

### SUMMARY OF THE INVENTION

The present invention provides a system for the polymerization of olefins wherein the system consists essentially of the combination of a conventional Ziegler-Natta catalyst component with a specific electron donor.

The catalyst may be a complex of a dialkoxy magnesium and a titanium halide.

The novel electron donor is selected from a silane compound of the following formulae : 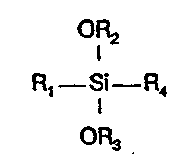 or 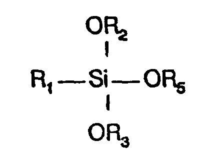 wherein; R₂, R₃ and R₅ are alkyl or aryl groups; R₄ is an alkyl group with a primary carbon atoms attached to the silicon atom, and R₁ is a primary alkyl group of 1-3 carbon atoms (exclusive of the carbon atoms in the alkyl substituents) which has the terminal carbon atom substituted with an alkyl substituent of the following formulae:

N-R'-N'-

or

N-R'-

where N and N' are an electron-donating group, such as an amino group (NH₂- and -NH-, respectively), R' is a primary alkyl group of 1-3 carbon atoms and, most preferably, is ethyl or propyl; R₂, R₃ and R₅ are methyl, ethyl, propyl, or butyl groups and not necessarily the same; and R₄ is a primary alkyl group of 1-3 carbon atoms and, most preferably is methyl; R₁ is most preferably 3-aminopropyl or 3-(2-aminoethylamino)propyl; R₄ is most preferably methyl. Preferred electron donors are 3-aminopropylmethyl diethoxysilane(3-APMDS) or 3-(2-aminoethylamino)propyltrimethoxysilane [3(2-AEA)PTS] or 3-(2-aminoethylamino)propylmethyldimethoxysilane [3-(2-AEA)PMDS]. In addition, the system may contain an organoaluminum compound which acts as a co-catalyst. A preferred co-catalyst is a trialkylaluminum, most preferably triethylaluminum (TEAI).

The invention also provides a catalyst system as described above, wherein the system is capable of polymerizing an olefin monomer with a catalyst efficiency of at least 5 kilograms of polymer product per gram of catalyst in one hour. Further, the catalyst system may be characterized by an efficiency of at least 5 kg/g-cat•h while the Si/Ti ratio defined by the mole ratio of the silane electron donor and the titanium component of the catalyst varies within the range 2-20. Additionally, the catalyst system may be further characterized by an efficiency of at least 5 while producing a polymer product with xylene solubles of less than 20.00 wt%.

The catalyst system may be further characterized by having an isotactic capacity such that the system produces a polymer product in which the xylene soluble atactic form may be kept at less than 20.00 wt% of the product while the Si/Ti mole ratio varies up to 20.

The invention also provides a process for the polymerization of olefins. The process comprises: contacting the Ziegler-Natta polymerization catalyst with an organoaluminum compound, preferably with a trialkylaluminum; contacting the catalyst with an electron donor either simultaneously with or after contact with the organoaluminum, the electron donor being a silane compound as described by the formulae above, pre-polymerizing the catalyst by contacting a small amount of monomer with the catalyst; and introducing the catalyst Into a polymerization reaction zone containing the organoaluminum compound, the electron donor and the monomer. The process further comprises withdrawing a polymer product in which the xylene solubles are at less than 20.00 wt%, while the Si/Ti ratio in the reaction zone is within the range 2-20.

### DETAILED DESCRIPTION OF THE INVENTION

The present invention relates to the combination of a specific electron donor with a conventional Ziegler-Natta catalyst component for use in the polymerization of propylene. Electron donors are typically used in two ways in the formation of a Ziegler-Natta catalyst and a catalyst system. First, an Internal electron donor may be used in the formation reaction of the catalyst as the transition metal halide is reacted with the metal hydride or metal alkyl. Examples of internal electron donors include: amines, amides, ethers, esters, aromatic esters, ketones, nitriles, phosphines, stibines, arsines, phosphoramides, thioethers, thioesters, aldehydes, alcoholates, and salts of organic adds. The second use for an electron donor in a catalyst system is as an external electron donor and stereoregulator in the polymerization reaction. The same compound may be used in both instances, although typically they are different. A common external electron donor is an organic silicon compound, for example, cyclohexylmethyl dimethoxysilane (CMDS). A description of the two types of electron donors is provided in U.S. Patent 4,535,068.

As the present invention relates particularly to external electron donors, the term "electron donor" as used herein, refers to the external donor. The external electron donor acts as a stereoregulator to control the amount of atactic form of polymer produced. it may also increase the production of isotactic polymers. Organic silicon compounds are known in the art for use as electron donors. Examples of electron donors that are organic silicon compounds are disclosed in U.S. Patent Nos. 4,218,339; 4,395,360; 4,328,122; 4,473,660 and 4,927,797.

It has been discovered that a particular group of compounds are functional as electron donors with conventional Ziegler-Natta catalysts. Any of the conventional Ziegler-Natta transition metal compound catalyst components can be used in the present invention. The compound is preferably of the general formula MR⁺ₓ where M is the metal, R is a halogen or a hydrocarboxyl and x is the valence of the metal. Preferably, M is a Group IVB. VB or VIB metal, more preferably a Group IVB, and most preferably titanium. Preferably, R is chlorine, bromine, an alkoxy or a phenoxy, more preferably chlorine or ethoxy and most preferably, chlorine. Illustrative examples of the transition metal compound catalyst components are TiCl₄, TiBr₄, Ti(OC₂H₅)₃Cl, Ti(OC₃H₇)₂Cl₂, TiOC₆H₁₃)₂Cl₂, Ti(OC₂H₅)₂Br₂ and Ti(OC₁₂H₂₅)Cl₃. Mixtures of the transition metal compounds may be used. No restriction on the number of transition metal compounds is made as long as at least one transition metal compound is present.

If supported, the support should be an inert solid which is chemically unreactive with any of the components of the conventional Ziegler-Natta Catalyst. The support is preferably a magnesium compound. Examples of the magnesium compounds which are to be used to provide a support source for the catalyst component are magnesium halides, dialkoxymagnesiums, alkoxymagnesium halides, magnesium oxyhalides, dialkylmagnesiums, magnesium oxide, magnesium hydroxide, and carboxylates of magnesium.

The internal electron-donor compounds suitable for preparing conventional Ziegler-Natta catalyst components include ethers, ketones, lactones, electron donors compounds with N, P and/or S atoms and specific classes of esters. Particularly suitable are the esters of phthalic acid, such as diisobutyl, dioctyl, diphenyl and benzylbutylphthalate; esters of malonic add, such as diisobutyl and diethylmalonate; alkyl and arylpivalates; alkyl, cycloalkyl and arylmaleates; alkyl and aryl carbonates such as diisobutyl, ethylphenyl and diphenylcarbonate; succinic acid esters, such as mono and diethyl succinate. These esters of phthalic add are the preferred donors.

One particular Ziegler-Natta catalyst which can be used in the present invention is a new generation, Ziegler-type titanium catalyst for the polymerization of olefins comprising a solid catalyst component obtained by (i) suspending a dialkoxy magnesium in an aromatic hydrocarbon that is liquid at normal temperatures, (ii) contacting the dialkoxy magnesium with a titanium halide and further (iii) contacting the resulting composition a second time with the titanium halide, and contacting the dialkoxy magnesium with a diester of an aromatic dicarboxylic add at some point during the treatment with the titanium halide in (ii), as disclosed in U.S. Patent Nos. 4,927,797; 4,816,433 and 4,839,321.

Preferred aromatic hydrocarbons useful in the formation of the catalyst include benzene, xylene, ethylbenzene, propylbenzene and trimethylbenzene. A diester of phthalic acids is preferably used as the diester of the aromatic dicarboxylic add. Examples include dimethyl phthalate, diethyl phthalate, dipropyl phthalate, diisopropyl phthalate, dibutyl phthalate, diisobutyl phthalate, diamyl phthalate, diisoamyl phthalate, methylbutyl phthalate, ethylbutyl phthalate, ethylisobutyl phthalate and ethylpropyl phthalate. Suitable titanium halides include TiCl₄, TiBr₄ and Til₄, with TiCl₄ being preferred.

The ratios of the respective components are not critical but can vary to tailor the performance of the catalyst However, in generally, the diester of the aromatic dicarboxylic add is used in an amount of 0.01 to 2 g, preferably 0.1 to 1 g, per gram of the dialkoxy magnesium, and the titanium halide Is used in an amount of at least 0.1 g, preferably at least 1 gram, per gram of the alkoxy magnesium. The amount of the aromatic hydrocarbon which is liquid at normal temperature should be sufficient to form a suspension.

Suspension of the dialkoxy magnesium Into the aromatic hydrocarbon is performed at a temperature of from room temperature to the boiling point of the aromatic hydrocarbon used for up to 100 hours, preferably up to 10 hours. It is important that the formed suspension should not be a homogeneous solution. The contact of the suspension with the titanium halide and the contact of the composition obtained by said contact with the titanium halide are carried out at a temperature of from -20°C to the boiling point of the titanium halide used, preferably 50 to 120°C, for 10 minutes to 10 hours. The means for contacting the components is not particularly critical, so far as sufficient contact is attained among the respective components. Preferably, the contact is carried out by using a vessel provided with a stirrer.

The external electron donors included in the present invention are organic silicon compounds described by the following formulae: 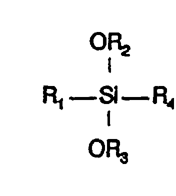 or 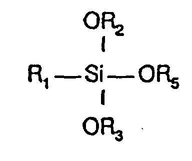 wherein R₂, R₃ and R₅ are alkyl or aryl groups; R₄ is an alkyl group with a primary carbon atom attached to the silicon atom, and R₁ is a primary alkyl group of 1-3 carbon atoms (exclusive of the carbon atoms in the alkyl substituents) which has the terminal carbon atom substituted with an alkyl substituent of the following formulae:

N-R'-N'-

or

N-R'-

where N and N' are an electron-donating group, such as an amino group (NH₂- and -NH-, respectively), R' is a primary alkyl group of 1-3 carbon atoms and, most preferably, is ethyl or propyl; R₂, R₃ and R₅ are methyl, ethyl or propyl groups, and R₄ is a primary alkyl group of 1-3 carbon atoms, most preferably, methyl. The most preferred electron donors are 3-aminopropylmethyl diethoxysilane (3-APMDS) or 3-(2-aminoethylamino) propyltrimethoxysilane [3(2-AEA)PTS] or 3-(2-aminoethylamino)propylmethyl dimethoxysilane [3-(2-AEA)PMDS]. The electron donors as described by the present Invention may be limited by the stability of the compound and the ease of handling including storage, transportation and use in the plant.

The catalyst systems, which Include 3-APMDS, 3-(2-AEA)PTS or 3-(2-AEA)PMDS electron donors have been shown to achieve efficiencies of at least 5 kilograms of polymer product per gram of catalyst in one hour (kg/g-cat•h) for Si/Ti mole ratios within the range 2-20. The optimum Si/Ti ratio in order to achieve the highest efficiency is within the range 2-10. The catalyst system is capable of achieving these efficiencies over a wide range of Si/Ti ratios (2-20) while exhibiting an isotactic capacity in controlling the formation of atactic polymer, or xylene solubles, at less than 20.00% by weight.

The present Invention also provides a process for the polymerization of olefins using the catalyst and the electron donor described by the above formulae consisting essentially of:
a) selecting a conventional Ziegler-Natta catalyst component;
b) contacting the catalyst with an organoaluminum compound;
c) contacting the catalyst with an electron donor as described above;
d) introducing the catalyst Into a polymerization reaction zone containing the organoaluminum compound, the electron donor and the monomer; and
e) extracting polymer product from the reactor.
Although the catalyst system may be used in almost any commercially known polymerization process, the preferred process of the present invention includes a pre-polymerization of the catalyst by contacting a small amount of monomer with the catalyst after the catalyst has been contacted with the electron donor. A pre-polymerization process is described in U.S. Patent Nos. 4,767,735, and 4,927,797.

As provided in those disclosures, a carrier stream for the catalyst is provided, the catalyst is contacted with the co-catalyst or organoaluminum compound, the catalyst is contacted with the electron donor, the catalyst stream is contacted with a relatively small amount of the total amount of monomer to be polymerized, the catalyst stream passes through a tubular reactor, and the pre-polymerized catalyst and catalyst stream are introduced into the polymerization reaction zone. The electron donor may be contacted with the catalyst simultaneously with the co-catalyst. A polymer product may then be withdrawn from the reactor. In using the described catalyst with the electron donors described by the formulae above, the catalyst may have an efficiency of at least 5 kg/g-cat•h while the Si/Ti mole ratio in the reaction is within the range 2-10. The polymer product may also be characterized by xylene solubles at less than 20.00 wt%.

The following Examples illustrate the present invention and its various advantages in more detail. The results are summarized in Tables 1-3. The catalyst used was prepared with the materials and processes as disclosed in U.S. Patent Nos. 4,927,797; 4,816,433 and 4,839,321.

### Example 1

Prior to a polymerization run, all traces of moisture and air were expelled from the reactor by heating to a temperature over 100°C for a minimum of 30 minutes under a constant purge of dry nitrogen. Following this heating, the reactor was cooled to room temperature (25°C) under nitrogen. The reactor was stabilized at room temperature and then 16 mmoles of hydrogen and 1.0 L of propylene were added. The reactor was stirred at 1000 rpm and the temperature was raised to 70°C. 1.0 mmole of TEAI and 0.01 mmole of 3-APMDS were added to a 40 cc tubular reaction vessel. Ten milligrams of catalyst in a mineral oil suspension were added to the 40 cc reaction cylinder. The TEAl and 3-APMDS were allowed to pre-contact approximately five minutes, and the catalyst was allowed to pre-contact the TEAl and 3-APMDS mixture for approximately two minutes. The tubular reaction vessel was then attached to an entry point on the reactor and the contents were flushed into the reactor with room temperature liquid propylene. The total amount of liquid propylene present In the reactor was about 1.2 L. The temperature of the reactor was then ramped up to 70°C. The polymerization reaction was allowed to proceed for one hour, at which point it was terminated by venting the excess propylene and cooling the reactor to room temperature. The reactor was then opened to collect the polymer product which was dried and analyzed. The efficiency of the catalyst was determined from the mass yield of polymer for the known amount of catalyst used. The efficiency was reported in kilograms of polymer product per gram of catalyst per hour. The Si/Ti mole ratio was calculated from the molar amount of 3-APMDS used divided by the molar amount of catalyst The xylene solubles were measured by dissolving the polymer in hot xylene, cooling the solution to 0°C and precipitating out the isotactic form. The xylene solubles was the wt% of the polymer that was soluble in the cold xylene. In addition, the bulk density of the polymer product was measured and calculated using standard techniques. The results are shown in Table 1.

### Examples 2-4

The procedures of Example 1 were repeated except that the total amount of 3-APMDS was varied as indicated in Table 1 from 0.02 mmoles to 0.10 mmoles. This varied the Si/Ti ratio from 20 to 2 and illustrates the effect of the Si/Ti ratio on the efficiency and on the xylene solubles. The results are tabulated in Table 1.

### Examples 5-8

The procedures of Example 1 were repeated except 3-(2-AEA)PTS was substituted for 3-APMDS. The results are tabulated In Table 2.

### Examples 9-12

The procedures of Example 1 were repeated except 3-(2-AEA)PMDS was substituted for 3-APMDS. The results are tabulated in Table 3.

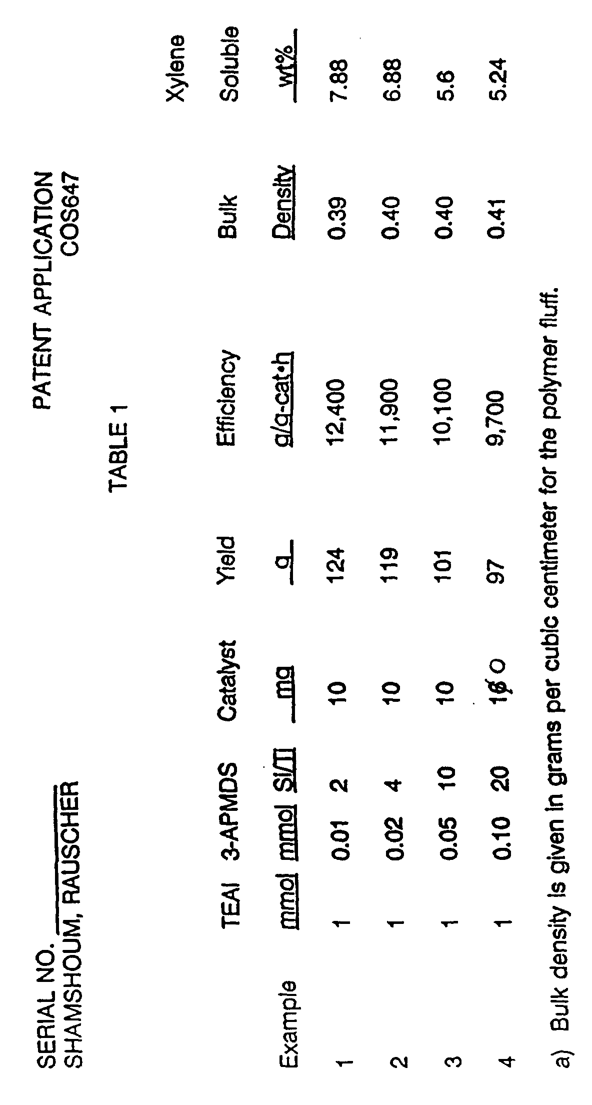

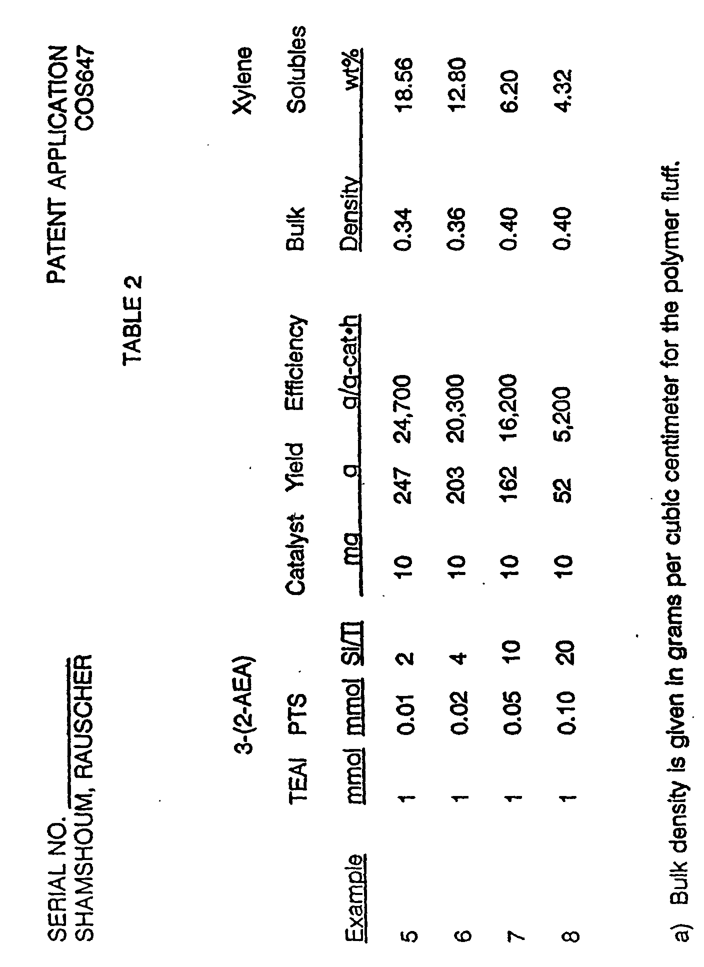

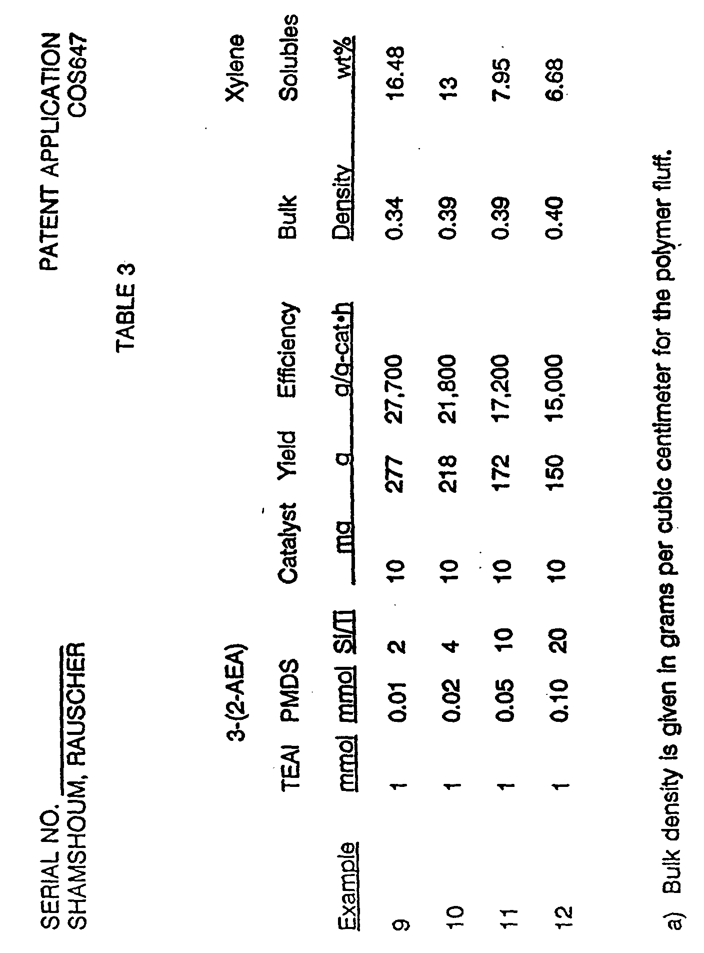

As shown in Tables 1, 2 and 3, the efficiency is at least 5 kg/g-cat.1h for Si/Ti ratios within the range from 2 to 20 and it decreases as the Si/Ti ratio increases from 2 to 20, reaching a mixumum at some point between 2 to 10 Si/Ti. The bifunctional electron donor system is capable of easily achieving efficiencies of at least 5 kg/g-cat.1h. Also, as seen from the results shown in Table 1, the xylene solubles are less than 20.00 wt% as the Si/Ti ratio varies from 2-20.

## Claims

1. In a system for the polymerization and copolymerization of olefins, the combination consisting essentially of:
(a) a conventional Ziegler-Natta catalyst component; and
(b) an external electron donor described by the formulae: 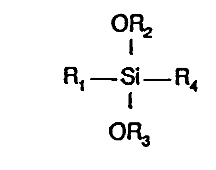 or 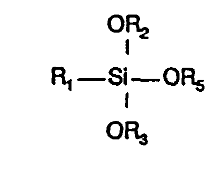 wherein R₁ is a primary alkyl group of 1-3 carbon atoms (exclusive of the carbon atoms in the alkyl subtituents) which has the terminal carbon atom substituted with a substituted alkyl of the following formulae:
N-R'-N'- or N-R'-
where N and N' are an electron-donating group and R' is a primary alkyl group of 1-3 carbon atoms ; R₂, R₃ and R₅ are each independently an alkyl or aryl group; and R₄ is an alkyl group with a primary carbon atom attached to the silicon atom.

2. The combination of Claim 1 wherein the conventional Ziegler-Natta catalyst component comprises: a solid catalyst component prepared by: (i) suspending a dialkoxy magnesium in an aromatic hydrocarbon that is liquid at normal temperatures, (ii) contacting the dialkoxy magnesium with a titanium halide and further contacting the resulting composition a second time with the titanium halide, and (iii) contacting the dialkoxy magnesium with a diester of an aromatic dicarboxylic acid at some point during the treatment with the titanium halide in (ii).

3. The combination of claim 1 wherein N and N' are an amino group.

4. The combination of claim 1 wherein R₁ is selected from the group consisting of 3-aminopropyl and 3-(2-aminoethylamino) propyl.

5. The combination of claim 1 wherein R₄ is a primary alkyl group of 1-3 carbon atoms.

6. The combination of claim 1 wherein R₄ is methyl.

7. The combination of claim 1 wherein R₂, R₃ and R₅ are selected from the group consisting of methyl, ethyl, propyl, and butyl groups.

8. The combination of claim 1 further comprising: (c) an organoaluminum compound.

9. The combination of Claim 8 wherein the organoaluminum compound is selected from the group consisting of a trialkylaluminum, an alkylaluminum dihalide, a trialkoxyaluminum, and a dialkylaluminum halide.

10. The combination of Claim 9 wherein the organoaluminum compound is triethylaluminum.

11. The combination of Claim 1 wherein the external electron donor is selected from the group consisting of 3-aminopropylmethyl diethoxysilane (3-APMDS) or 3-(2-aminoethylamino) propyltrimethoxysilane [3(2-AEA)PTS] or 3-(2-aminoethylamino)propylmethyldimethoxysilane [3-(2-AEA)PMDS].

12. The combination of Claim 10 wherein the external electron donor is selected from the group consisting of 3-aminopropylmethyl diethoxysilane (3-APMDS) or 3-(2-aminoethylamino) propyltrimethoxysilane [3(2-AEA)PTS] or 3-(2-aminoethylamlno)propylmethyldimethoxysilane [3-(2-AEA)PMDS].

13. A catalyst system for the polymerization and copolymerization of olefins, said system consisting essentially of:
(a) a conventional Ziegler-Natta catalyst component; and
(b) an external electron donor described by the formulae: 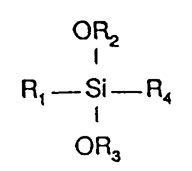 or 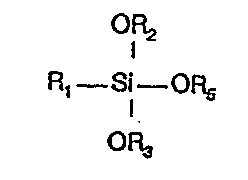 wherein R₁ is a primary alkyl group of 1-3 carbon atoms (exclusive of the carbon atoms in the alkyl substituents) which has the terminal carbon atom substituted with a substituted alkyl of the following formulae :
N-R' -N' - or N-R'-
where N and N' are an electron-donating group and R' is a primary alkyl group of 1-3 carbon atoms ; R₂, R₃ and R₅ are each independently an alkyl or aryl group; and R₄ is an alkyl group with a primary carbon atom attached to the silicon atom.
(c) an organoaluminum compound; said system being **characterized by**:
(i) a catalyst efficiency of at least 5 kilograms of polymer product per gram of catalyst in one hour as the mole ratio Si/Ti as derived from the Si in compound (b) to the Ti from compound (a) is within the range of 2-20.

14. The catalyst system of Claim 13 wherein the conventional Ziegler-Natta catalyst component comprises:
a solid catalyst component prepared by: (i) suspending a dialkoxy magnesium in an aromatic hydrocarbon that Is liquid of normal temperatures, (ii) contacting the dialkoxy magnesium with a titanium halide and further contacting the resulting composition a second time with the titanium halide, and (iii) contacting the dialkoxy magnesium with a diester of an aromatic dicarboxylic add at some point during the treatment with the titanium halide in (ii).

15. The system of claim 13 wherein the system is further **characterized by** : (ii) an isotactic capacity such that the system produces a polymer product in which the xylene solubles are controlled at less than 20.00 wt% of the polymer product while the Si/Ti mole ratio varies down to 2.

16. The system of claim 13 wherein N and N' are an amino group.

17. The system of claim 13 wherein R₁ is selected from the group consisting of 3-aminopropyl and 3-(2-aminoethylamino) propyl.

18. The system of claim 13 wherein R₄ is a primary alkyl group of 1-3 carbon atoms.

19. The system of claim 13 wherein R₄ is methyl.

20. The system of claim 13 wherein R₂, R₃ and R₅ are selected from the group consisting of methyl, ethyl, propyl, and butyl groups.

21. The system of claim 13 wherein the catalyst is prepolymerized.

22. The system of Claim 13 wherein the organoaluminum compound is selected from the group consisting of a trialkylaluminum, an alkylaluminum dihalide, a trialkoxyaluminum, and a dialkylaluminum halide.

23. The system of Claim 13 wherein the external electron donor is selected from the group consisting of 3-aminopropylmethyl diethoxysilane (3-APMDS) or 3-(2-aminoethylamino) propyltrimethoxysilane [3(2-AEA)PTS] or 3-(2-aminoethylamino)propylmethyl dimethoxysilane [3-(2-AEA)PMDS].

24. The system of Claim 22 wherein the organoaluminum compound is triethylaluminum.

25. A process for the polymerization of olefins, consisting essentially of:
(a) selecting a conventional Ziegler-Natta catalyst component; and
(b) contacting the catalyst with an organoaluminum compound;
(c) contacting said catalyst with an external electron donor either simultaneously with or after step (b), said external electron donor being described by the formulae: 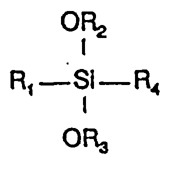 or 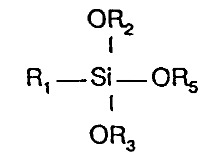 wherein R₁ is a primary alkyl group of 1-3 carbon atoms (exclusive of the carbon atoms in the alkyl substituents) which has the terminal carbon atom substituted with a substituted alkyl of the following formulae :
N-R' -N' - or N-R' -
where N and N' are an electron-donating group and R' is a primary alkyl group of 1-3 carbon atoms ; R₂, R₃ and R₅ are each independently an alkyl or aryl group; and R₄ is an alkyl group with a primary carbon atom attached to the silicon atom;
(d) pre-polymerizing said catalyst by contacting a small amount of monomer with said catalyst; and
(e) introducing said catalyst into a polymerization reaction zone containing said organoaluminum compound, said electron donor and said monomer.

26. The process of claim 25 wherein the conventional Ziegler-Natta catalyst component is prepared by a process comprising :
preparing a solid catalyst component prepared by : (i) suspending a dialkoxy magnesium in an aromatic hydrocarbon that is liquid of normal temperatures, (ii) contacting the dialkoxy magnesium with a titanium halide and further contacting the resulting composition a second time with the titanium halide, and (iii) contacting the dialkoxy magnesium with a diester of an aromatic dicarboxylic acid at some point during the treatment with the titanium halide in (ii).

27. The process of claim 25 wherein said organoaluminum compound is triethylaluminum.

28. The process of claim 25 wherein N and N' are an amino group.

29. The process of claim 25 wherein R₁ is selected from the group consisting of 3-aminopropyl and 3-(2-aminoethylamino) propyl.

30. The process of claim 25 wherein R₄ is a primary alkyl group of 1-3 carbon atoms.

31. The process of claim 30 wherein R₄ is methyl.

32. The process of claim 25 wherein said monomer is propylene.

33. The process of claim 25 wherein said external electron donor is selected from the group consisting of 3-aminopropylmethyl diethoxysilane (3-APMDS) or 3-(2-aminoethylamino) propyltrimethoxysilane [3-(2-AEA)PTS] OR 3-(2-aminoethylamino) propylmethyldimethoxysilane [3-(2-AEA)PMDS].

34. The process of claim 25 wherein said process is **characterized by** a catalyst efficiency of at least 5 kg of polymer product per gram of catalyst in one hour with the mole ratio of Si/Ti from the external silicon electron donor and the catalyst within the range of 2-20.

35. The process of claim 25 wherein said process is **characterized by** producing a polymer product in which the xylene soluble portion is at less than 20.00 wt% of the polymer product.

36. The process of claim 25 further comprising the addition of a second monomer so as to form a copolymer.

## Patentansprüche

1. System für die Polymerisation und Copolymerisation von Olefinen, wobei die Kombination im wesentlichen besteht aus:
(a) einer herkömmlichen Ziegler-Natta Katalysatorkomponente und
(b) einem Außenelektronendonor, beschrieben durch die Formeln: 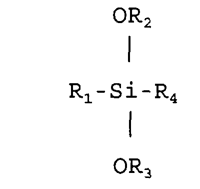 oder 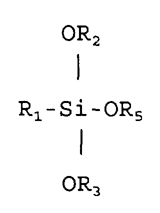
wobei R₁ eine primäre Alkylgruppe mit 1-3 Kohlenstoffatomen ist (ausschließlich der Kohlenstoffatome in den Alkylsusbtituenten), die das endständige Kohlenstoffatom substituiert mit einem substituierten Alkyl der folgenden Formeln hat:
N-R'-N'- oder N-R'-
wobei N und N' eine Elektronendonorgruppe sind, und R' ist eine primäre Alkylgruppe mit 1-3 Kohlenstoffatomen, R₂, R₃ und R₅ sind jeweils unabhängig eine Alkyl- oder Arylgruppe, und R₄ ist eine Alkylgruppe mit einem primären Kohlenstoffatom, angefügt an das Siliciumatom.

2. Kombination nach Anspruch 1, wobei die herkömmliche Ziegler-Natta Katalysatorkomponente umfaßt: eine feste Katalysatorkomponente, hergestellt durch:
(i) Suspendieren eines Dialkoxymagnesiums in einem aromatischen Kohlenwasserstoff, der bei normalen Temperaturen flüssig ist, (ii) in Kontakt bringen des Dialkoxymagnesiums mit einem Titanhalogenid und ferner in Kontakt bringen der sich ergebenden Zusammensetzung ein zweites Mal mit dem Titanhalogenid und
(iii) in Kontakt bringen des Dialkoxymagnesiums mit einem Diester einer aromatischen Dicarbonsäure an irgendeinem Punkt während der Behandlung mit dem Titanhalogenid in (ii).

3. Kombination nach Anspruch 1, wobei N und N' eine Aminogruppe sind.

4. Kombination nach Anspruch 1, wobei R₁ aus der Gruppe, bestehend aus 3-Aminopropyl und 3-(2-Aminoethylamino)propyl, ausgewählt ist.

5. Kombination nach Anspruch 1, wobei R₄ eine primäre Alkylgruppe mit 1-3 Kohlenstoffatomen ist.

6. Kombination nach Anspruch 1, wobei R₄ Methyl ist.

7. Kombination nach Anspruch 1, wobei R₂, R₃ und R₅ aus der Gruppe, bestehend aus Methyl-, Ethyl-, Propyl- und Butylgruppen ausgewählt sind.

8. Kombination nach Anspruch 1, ferner umfassend: (c) eine Organoaluminiumverbindung.

9. Kombination nach Anspruch 8, wobei die Organoaluminiumverbindung ausgewählt ist aus der Gruppe, bestehend aus einem Alkylaluminium, einem Alkylaluminiumdihalogenid, einem Trialkoxyaluminium, einem Dialkylaluminiumhalogenid und einem Triisobutylaluminium.

10. Kombination nach Anspruch 9, wobei die Organoaluminiumverbindung Triethylaluminium ist.

11. Kombination nach Anspruch 1, wobei der Außenelektronendonor ausgewählt ist aus der Gruppe, bestehend aus 3-Aminopropylmethyldiethoxysilan (3-APMDS) oder 3-(2-Aminoethylamino)propyltrimethoxysilan [3(2-AEA)PTS] oder 3-(2-Aminoethylamino)propylmethyldimethoxysilan [3-(2-AEA)PMDS].

12. Kombination nach Anspruch 10, wobei der Außenelektronendonor ausgewählt ist aus der Gruppe, bestehend aus 3-Aminopropylmethyldiethoxysilan (3-APMDS) oder 3-(2-Aminoethylamino)propyltrimethoxysilan [3(2-AEA)PTS] oder 3-(2-Aminoethylamino)propylmethyldimethoxysilan [3-(2-AEA)PMDS].

13. Katalysatorsystem für die Polymerisation und Copolymerisation von Olefinen, wobei das System im wesentlichen besteht aus:
(a) einer herkömmlichen Ziegler-Natta Katalysatorkomponente und
(b) einem Außenelektronendonor, beschrieben durch die Formeln: 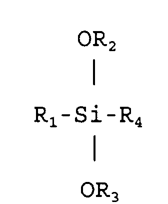 oder 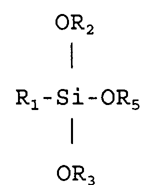 wobei R₁ eine primäre Alkylgruppe mit 1-3 Kohlenstoffatomen (ausschließlich der Kohlenstoffatome in den Alkylsubstituenten) ist, die das endständige Kohlenstoffatom substituiert mit einem substituierten Alkyl der folgenden Formeln hat:
N-R'-N'- oder N-R'-
wobei N und N' eine Elektronendonorgruppe sind, und R' ist eine primäre Alkylgruppe mit 1-3 Kohlenstoffatomen, R₂, R₃ und R₅ sind jeweils unabhängig eine Alkyl- oder Arylgruppe, und R₄ ist eine Alkylgruppe mit einem primären Kohlenstoffatom, angefügt an das Siliciumatom,
(c) einer Organoaluminiumverbindung, wobei das System **gekennzeichnet ist durch:**
(i) eine Katalysatorwirksamkeit von mindestens 5 Kilogramm Polymerprodukt pro Gramm Katalysator in einer Stunde, wenn das Molverhältnis Si/Ti, wie von dem Si in Verbindung (b) abstammend, zu dem Ti von Verbindung (a) in dem Bereich von 2-20 ist.

14. Katalysatorsystem nach Anspruch 13, wobei die herkömmliche Ziegler-Natta Katalysatorkomponente umfaßt:
eine Feststoffkatalysatorkomponente, hergestellt durch:
(i) Suspendieren eines Dialkoxymagnesiums in einem aromatischen Kohlenwasserstoff, der bei normalen Temperaturen flüssig ist,
(ii) in Kontakt bringen des Dialkoxymagnesiums mit einem Titanhalogenid und ferner in Kontakt bringen der sich ergebenden Zusammensetzung ein zweites Mal mit dem Titanhalogenid und
(iii) in Kontakt bringen des Dialkoxymagnesiums mit einem Diester einer aromatischen Dicarbonsäure an irgendeinem Punkt während der Behandlung mit dem Titanhalogenid in (ii).

15. System nach Anspruch 13, wobei das System ferner **gekennzeichnet ist durch:**
(ii) eine derartige isotaktische Kapazität, daß das System ein Polymerprodukt herstellt, in dem die xyllollöslichen Stoffe bei weniger als 20,00 Gew.% des Polymerprodukts kontrolliert werden, während das Si/Ti Molverhältnis bis herunter zu 2 variiert.

16. System nach Anspruch 13, wobei N und N' eine Aminogruppe sind.

17. System nach Anspruch 13, wobei R₁ ausgewählt ist aus der Gruppe, bestehend aus 3-Aminopropyl und 3-(2-Aminoethylamino)propyl.

18. System nach Anspruch 13, wobei R₄ eine primäre Alkylgruppe mit 1-3 Kohlenstoffatomen ist.

19. System nach Anspruch 13, wobei R₄ Methyl ist.

20. System nach Anspruch 13, wobei R₂, R₃ und R₅ ausgewählt sind aus der Gruppe, bestehend aus Methyl-, Ethyl-, Propyl- und Butylgruppen.

21. System nach Anspruch 13, wobei der Katalysator vorpolymerisiert ist.

22. System nach Anspruch 13, wobei die Organoaluminiumverbindung ausgewählt ist aus der Gruppe, bestehend aus einem Alkylaluminium, einem Alkylaluminiumdihalogenid, einem Trialkoxyaluminium, einem Dialkylaluminiumhalogenid und einem Triisobutylaluminium.

23. System nach Anspruch 13, wobei der Außenelektronendonor ausgewählt ist aus der Gruppe, bestehend aus 3-Aminopropylmethyldiethoxysilan (3-APMDS) oder 3-(2-Aminoethylamino)propyltrimethoxysilan [3(2-AEA)PTS] oder 3-(2-Aminoethylamino)propylmethyldimethoxysilan [3-(2AEA)PMDS].

24. System nach Anspruch 22, wobei die Organoaluminiumverbindung Triethylaluminium ist.

25. Verfahren für die Polymerisation von Olefinen, im wesentlichen bestehend aus:
(a) Auswählen einer herkömmlichen Ziegler-Natta Katalysatorkomponente und
(b) in Kontakt bringen des Katalysators mit einer Organoaluminiumverbindung,
(c) in Kontakt bringen des Katalysators mit einem Außenelektronendonor entweder gleichzeitig mit oder nach Stufe (b), wobei der Außenelektronendonor durch die Formeln beschrieben ist: 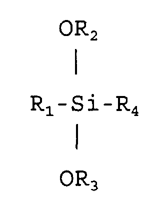 oder 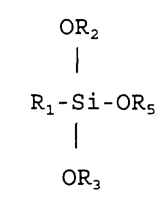 wobei R₁ eine primäre Alkylgruppe mit 1-3 Kohlenstoffatomen ist (ausschließlich der Kohlenstoffatome in den Alkylsubstituenten), die das endständige Kohlenstoffatom substituiert mit einem substituierten Alkyl der folgenden Formeln hat:
N-R'-N'- oder N-R'-
wobei N und N' eine Elektronendonorgruppe sind, und R' ist eine primäre Alkylgruppe mit 1-3 Kohlenstoffatomen, R₂, R₃ und R₅ sind jeweils unabhängig eine Alkyl- oder Arylgruppe, und R₄ ist eine Alkylgruppe mit einem primären Kohlenstoffatom, angefügt an das Siliciumatom,
(d) Vorpolymerisieren des Katalysators durch in Kontakt bringen einer geringen Menge von Monomer mit dem Katalysator und
(e) Einführen des Katalysators in eine Polymerisationsreaktionszone, enthaltend die Organoaluminiumverbindung, den Elektronendonor und das Monomer.

26. Verfahren nach Anspruch 25, wobei die herkömmliche Ziegler-Natta Katalysatorkomponente hergestellt wird durch ein Verfahren, umfassend:
Herstellen einer Feststoffkatalysatorkomponente, hergestellt durch:
(i) Suspendieren eines Dialkoxymagnesiums in einem aromatischen Kohlenwasserstoff, der bei normalen Temperaturen flüssig ist,
(ii) in Kontakt bringen des Dialkoxymagnesiums mit einem Titanhalogenid und ferner in Kontakt bringen der sich ergebenden Zusammensetzung ein zweites Mal mit dem Titanhalogenid und
(iii) in Kontakt bringen des Dialkoxymagnesiums mit einem Diester einer aromatischen Dicarbonsäure an irgendeinem Punkt während der Behandlung mit dem Titanhalogenid in (ii).

27. Verfahren nach Anspruch 25, wobei die Organoaluminiumverbindung Triethylaluminium ist.

28. Verfahren nach Anspruch 25, wobei N und N' eine Aminogruppe sind.

29. Verfahren nach Anspruch 25, wobei R₁ aus der Gruppe, bestehend aus 3-Aminopropyl und 3-(2-Aminoethylamino)propyl, ausgewählt wird.

30. Verfahren nach Anspruch 25, wobei R₄ eine primäre Alkylgruppe mit 1-3 Kohlenstoffatomen ist.

31. Verfahren nach Anspruch 30, wobei R₄ Methyl ist.

32. Verfahren nach Anspruch 25, wobei das Monomer Propylen ist.

33. Verfahren nach Anspruch 25, wobei der Außenelektronendonor ausgewählt wird aus der Gruppe, bestehend aus 3-Aminopropylmethyldiethoxysilan (3-APMDS) oder 3-(2-Aminoethylamino)propyltrimethoxysilan [3-(2-AEA)PTS] oder 3-(2-Aminoethylamino)propylmethyldimethoxysilan [3-(2-AEA)PMDS].

34. Verfahren nach Anspruch 25, wobei das Verfahren **gekennzeichnet ist durch** eine Katalysatorwirksamkeit von mindestens 5 kg Polymerprodukt pro Gramm Katalysator in einer Stunde mit dem Molverhältnis von Si/Ti von dem Außensiliciumelektronendonor und dem Katalysator in dem Bereich von 2-20.

35. Verfahren nach Anspruch 25, wobei das Verfahren **gekennzeichnet ist durch** Herstellen eines Polymerprodukts, in dem der xylollösliche Teil bei weniger als 20,00 Gew.% des Polymerprodukts ist.

36. Verfahren nach Anspruch 25, ferner umfassend die Zugabe eines zweiten Monomeren, wodurch ein Copolmyer gebildet wird.

## Revendications

1. Dans un système de polymérisation et de copolymérisation d'oléfines, la combinaison consistant essentiellement en:
(a) un composant de catalyseur de Ziegler-Natta habituel; et
(b) un donneur d'électrons externe décrit par les formules: 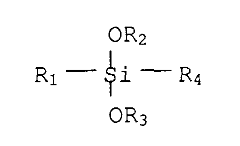 ou 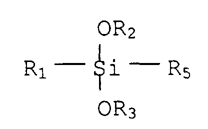
où R₁ est un groupe alkyle primaire de 1-3 atomes de carbone (à l'exclusion des atomes de carbone dans les substituants alkyles) dont l'atome de carbone terminal est substitué par un alkyle substitué de la formule suivante:
N-R' -N' - ou N-R'-
où N et N' sont des groupes de donneur d'électrons et R' est un groupe alkyle primaire de 1-3 atomes de carbone; R₂, R₃ et R₅ sont chacun indépendamment un alkyle ou groupe alkyle; et R₄ est un groupe alkyle avec un atome de carbone primaire lié à l'atome de silicone.

2. La combinaison de la revendication 1 où le composant de catalyseur de Ziegler-Natta habituel comprend: un composant de catalyseur solide préparé par: (i) mise en suspension d'un dialkoxy magnesium dans un hydrocarbure aromatique qui est liquide à température normale, (ii) mise en contact du dialkoxy magnésium avec un halogénure de titane et mise en contact supplémentaire de la composition résultante une deuxième fois avec l'halogénure de titane, et (iii) mise en contact du dialkoxy magnésium avec un diester d'un acide dicarboxylique aromatique à un certain point pendant le traitement avec l'halogénure de titane dans (ii).

3. La combinaison de la revendication 1 où N et N' sont un groupe amino.

4. La combinaison de la revendication 1 où R₁ est choisi dans le groupe consistant en 3-aminopropyle et 3-(2-aminoéthylamino) propyle.

5. La combinaison de la revendication 1 où R₄ est un groupe alkyle primaire de 1-3 atomes de carbone.

6. La combinaison de la revendication 1 où R₄ est un groupe méthyle.

7. La combinaison de la revendication 1 où R₂, R₃ et R₅ sont choisis dans le groupe consistant en groupes méthyle, éthyle et butyle.

8. La combinaison de la revendication 1 comprenant en outre: (c) un composé d'organoaluminium.

9. La combinaison de la revendication 8 où le composé d'organoaluminium est choisi dans le groupe consistant en un alkylaluminium, un dihalogénure d'alkyle aluminium, un trialkoxyaluminium, un halogénure de dialkylaluminium et un triisobutylaluminium.

10. La combinaison de la revendication 9 où le composé d'organoaluminium est le triéthylaluminium.

11. La combinaison de la revendication 1 où le donneur d'électrons externe est choisi dans le groupe consistant en 3-aminopropylméthyl diéthoxysilane (3-APMDS) ou 3-(2-aminoéthylamino)propyltriméthoxysilane [3(2-AEA)PTS] ou 3-(2-aminoéthylamino)propyltriméthoxysilane [3(2-AEA)PTS] ou 3-(2-aminoéthylamino)propylméthoxysilane [3(2-AEA)PMDS].

12. La combinaison de la revendication 10 où le donneur d'électrons externe est choisi dans le groupe consistant en 3-aminopropylméthyl diéthoxysilane (3-APMDS) ou 3-(2-aminoéthylamino)propyltriméthoxysilane [3(2-AEA)PTS] ou 3-(2-aminoéthylamino)propylméthyldiméthoxysilane [3(2-AEA)PMDS].

13. Un système de catalyseur pour la polymérisation et copolymérisation d'oléfines, ce système consistant essentiellement en:
(a) un composant de catalyseur de Ziegler-Natta habituel; et
(b) un donneur d'électron externe décrit par les formules: 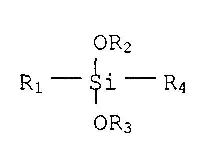 ou 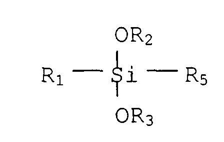 où R₁ est un groupe alkyle primaire de 1-3 atomes de carbone (à l'exclusion des atomes de carbone dans les substituants alkyles) dont l'atome de carbone terminal est substitué par un alkyle substitué de la formule suivant:
N-R'-N' ou N-R'-
où N et N' sont un groupe donneur d'électrons et R' est un groupe alkyle primaire de 1-3 atomes de carbone; R₂, R₃ et R₅ sont chacun indépendamment un groupe alkyle ou aryle; et R₄ est un groupe alkyle dont un atome de carbone primaire est lié à l'atome de silicium.
(c) un composé d'organoaluminium; ce système étant **caractérisé par**:
(i) un rendement catalyseur d'au moins 5 kg de produit polymère par gramme de catalyseur lorsque le rapport mole Si/Ti dérivé du Si dans le composé (b) au Ti du composé (a) est dans l'intervalle 2-20.

14. Le système de catalyseur selon la revendication 13 où le composant de catalyseur de Ziegler-Natta habituel comprend:
un composant de catalyseur préparé par: (i) mise en suspension du dialkoxy magnésium dans un hydrocarbure aromatique qui est liquide aux températures normales, (ii) mise en contact du dialkoxy magnésium avec un halogénure de titane et en outre mise en contact de la composition résultante une deuxième fois avec un halogénure de titane, et (iii) mise en contact du dialkoxy magnésium avec un diester d'un acide dicarboxylic aromatique à un certain point dans le traitement avec l'halogénure de titane au cours de (ii).

15. Le système selon la revendication 13 où le système est en outre **caractérisé par**:
(ii) une capacité d'isotacticité telle que le système produit un produit polymère dans lequel les xylènes solubles sont contrôlés à moins de 20% en poids du produit polymère alors que le rapport mole Si/Ti varie en diminuant jusqu'à 2.

16. Le système selon la revendication 13 où N et N' sont un groupe amino.

17. Le système selon la revendication 13 où R₁ est choisi dans le groupe consistant en 3-aminopropyle et 3-(2-aminoéthylamino) propyle.

18. Le système selon la revendication 13 où R₄ est un groupe alkyle primaire de 1-3 atomes de carbone.

19. Le système selon la revendication 13 où R₄ est un méthyle.

20. Le système selon la revendication 13 où R₂, R₃ et R₅ sont choisi dans le groupe consistant en méthyle, éthyle, propyle et butyle.

21. Le système selon la revendication 13 où le catalyseur est pré-polymérisé.

22. Le système selon la revendication 13 où le composé d'organoaluminium est choisi dans le groupe consistant en alkylaluminium, dihalogénure d'alkylaluminium, trialkoxyaluminium, halogénure de dialkylaluminium et triisobutylaluminium.

23. Le système selon la revendication 13 où le donneur d'électrons externe est choisi dans le groupe consistant en 3-aminopropylméthyl diéthoxysilane (3-APMDS) ou 3-(2-aminoéthylamino)propyltriméthoxysilane [3(2-AEA)PTS] ou 3-(2-aminoéthylamino)propylméthyldiméthoxysilane [3(2-AEA)PMDS].

24. Le système selon la revendication 22 où le composé d'organoaluminium est le triéthylaluminium.

25. Un procédé de polymérisation d'oléfines consistant essentiellement à :
(a) choisir un composant de catalyseur de Ziegler-Natta habituel; et
(b) mettre en contact le catalyseur avec un composé d'organoaluminium:
(c) mettre en contact ce catalyseur avec un donneur d'électrons externe soit simultanément lors de soit après l'étape (b), ce donneur d'électrons externe étant décrit par les formules: 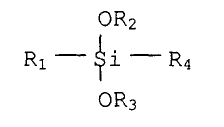 ou 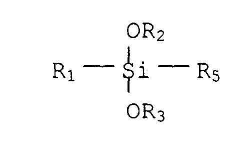 où R₁ est un groupe alkyle primaire de 1-3 atomes de carbone (à l'exclusion des atomes de carbone dans le substituant d'alkyle) dont l'atome de carbone terminal est substitué par un alkyle substitué de la formule suivante:
N-R'-N' - ou N-R'-
où N et N' sont des groupes de donneurs d'électron et R' est un groupe alkyle primaire de 1-3 atomes de carbone; R₂, R₃ et R₅ sont chacun indépendamment un alkyle ou groupe alkyle; et R₄ est un groupe alkyle avec un atome de carbone primaire lié à l'atome de silicone;
(d) pré-polymériser ce catalyseur par mise en contact avec une petite quantité de monomère avec ce catalyseur; et
(e) introduire ce catalyseur dans une zone de réaction de polymérisation contenant ces composés d'organoaluminium, ce donneur d'électrons et ce monomère.

26. Procédé selon la revendication 25 où le composant de catalyseur de Ziegler-Natta habituel est préparé par un procédé comprenant: préparer un catalyseur solide préparé par: (i) mise en suspension du dialkoxy magnésium dans un hydrocarbure aromatique qui est liquide aux températures normales, (ii) mise en contact du dialkoxy magnésium avec un halogénure de titane et en outre mise en contact de la composition résultante une deuxième fois avec un halogénure de titane, et (iii) mise en contact du dialkoxy magnésium avec un diester d'un acide dicarboxylique aromatique à un certain point dans le traitement avec l'halogénure de titane au cours de (ii).

27. Le procédé selon la revendication 25 où ce composé d'organoaluminium est le triéthylaluminium.

28. Le procédé selon la revendication 25 où N et N' sont un groupe amino.

29. Le procédé selon la revendication 25 où R₁ est choisi dans le groupe consistant en 3-aminopropyle et 3-(2-aminoéthylamino)propyle.

30. Le procédé selon la revendication 25 où R₄ est un groupe alkyle primaire de 1-3 atomes de carbone.

31. Le procédé selon la revendication 30 où R₄ est un méthyle.

32. Le procédé selon la revendication 25 où ce monomère est le propylène.

33. Le procédé selon la revendication 25 où ce donneur d'électrons externe est choisi dans le groupe consistant en 3-aminopropylméthyl diéthoxysilane (3-APMDS) ou 3-(2-aminoéthylamino)propyltriméthoxysilane [3(2-AEA)PTS] ou 3-(2-aminoéthylamino)propyltriméthoxysilane [3(2-AEA)PTS] ou 3-(2-aminoéthylamino)propylméthyldiméthoxysilane [3(2-AEA)PMDS].

34. Le procédé selon la revendication 25 où ce procédé se **caractérise par** un rendement de catalyseur d'au moins 5 kg de polymère par gramme de catalyseur en une heure avec un rapport molaire de Si/Ti provenant du donneur d'éléctrons externe de silicium et du catalyseur dans un intervalle de 2-20.

35. Le procédé selon la revendication 25 où ce procédé se **caractérise en ce qu'**on produit un produit polymère dans lequel la partie soluble de xylène est inférieure à 20% en poids du produit polymère.

36. Le procédé selon la revendication 25 comprenant en outre l'addition d'un second monomère de façon à former un copolymère.
